# EUROPEAN PATENT SPECIFICATION

(11) **EP 4 079 144 B1**
(45) Date of publication and mention of the grant of the patent: **26.03.2025**
(21) Application number: 22168890.6
(22) Date of filing: 19.04.2022
(51) Int. Cl.: A01G 9/02

(54) **KIT FOR ATTACHING PLANTS TO A WALL**
KIT ZUR BEFESTIGUNG VON PFLANZEN AN EINER WAND
KIT POUR FIXER DES PLANTES A UN MUR

(30) Priority: 22.04.2021 IT 202100010121
(43) Date of publication of application: 26.10.2022
(73) Proprietor: Lightgreen S.r.l., 20836 Briosco MB (IT)
(72) Inventor: Rossini, Matteo, 20836 Briosco (IT)
(74) Representative: Perani & Partners S.p.A.

(56) References cited:
- CN-A- 108 184 485
- KR-A- 20200 087 508
- US-A1- 2016 050 856

## Description

The present invention relates to a kit for attaching plants to a wall, in particular vertical but also inclined. Such kit may be used to arrange greenery on any type of wall, e.g. indoors or on building facades.

It is known in the state of the art to decorate buildings and rooms with plants, moss, shrubs, creepers or the like. These plants are usually placed in vases, which are attached in various ways to the walls to be decorated. In recent times, decoration using plants has attracted considerable interest, in particular aimed at improving eco-friendliness and environmental sustainability in civil construction.

The content of document US 2016/050856 A1 also forms part of the prior art. This document shows an expandable vertical garden system comprising a frame; drip irrigation pipes; drainage pipes; a drain tray; and optionally pots or plant containers.

The difficulties in setting up an irrigation system for a large number of decorative plants are also well known. Typically, they are used automatic irrigation systems, which are regulated so as to deliver water depending on the type of plant. However, they do not always guarantee a delivery proportionate to the needs of each plant. In addition, in the case of a green wall the water irrigated at the top tends to run down, causing uneven irrigation. Furthermore, if the plants are placed outside, they receive rainwater in addition to water from the irrigation system. This results in outdoor plants occasionally receiving more water than necessary. Excess water is drained from the vases and is therefore lost.

### SUMMARY OF THE INVENTION

In this context, the technical task underlying the present invention is to provide a kit for attaching plants which obviates the drawbacks in the prior art as described above.

In particular, it is an object of the present invention to make available a kit for attaching plants having an irrigation system capable of allowing for greater water saving, especially for outdoor plants, recovery of irrigated water in both outdoor and indoor use, and finally more proportionate irrigation per plant species and per wall area.

The defined technical task and the specified objects are substantially achieved by a kit for attaching plants comprising the technical characteristics set forth in one or more of the appended claims.

Thanks to the panel channelling, it is possible to close the irrigation circuit by re-introducing drainage water into the delivery pipe. As a result, any excess rainwater received by the plant feeds the irrigation system, thus reducing the amount of water taken from the water main. Advantageously, for each of the containers (vases), it will therefore be possible to regulate the flow by means of simple taps or solenoid valves, and the inflow of water on the single vase will not affect the other vases, both for the delivery and the return, as each single vase is provided with a respective drain that allows excess water to drain away.

### LIST OF FIGURES

Further features and advantages of the present invention will become more apparent from the approximate and thus non-limiting description of a preferred, but non-exclusive, embodiment of a kit for attaching plants, as shown in the accompanying drawings, wherein:
- Figure 1 is an exploded perspective view of a first embodiment of a kit for attaching plants according to the present invention;
- Figure 2 is a front view of a support panel from the kit of Figure 1;
- Figure 3 is a front view of a plurality of support panels of Figure 2, placed side by side; and
- Figure 4 is a perspective view of a second embodiment of a kit for attaching plants according to the present invention.

### DETAILED DESCRIPTION

With reference to the appended figures, 1 denotes a kit for attaching plants to a wall according to the present invention.

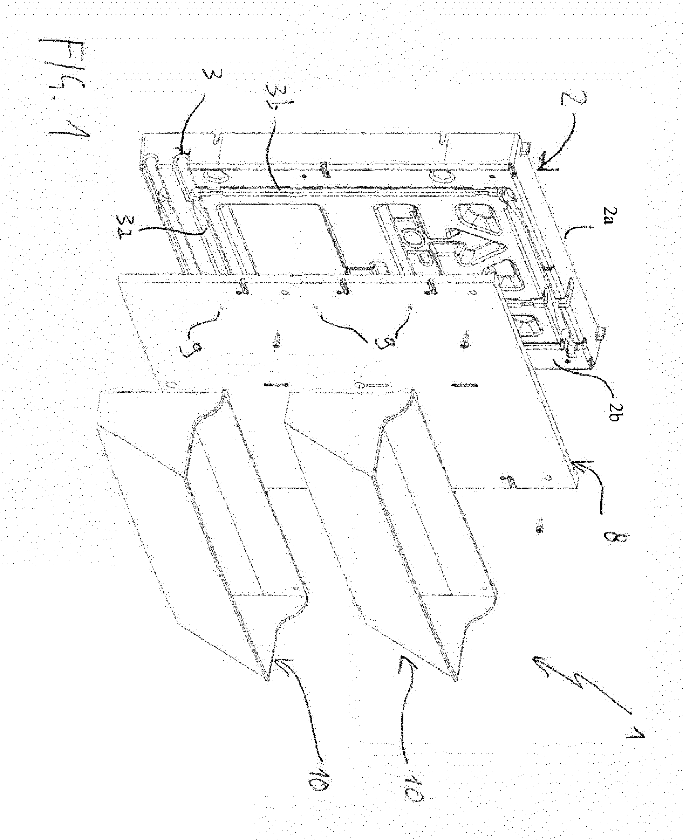

The kit 1, shown as assembled in Figure 1, comprises a main panel 2 fixable to a wall (not shown). Such a panel 2 has a rectangular or square shape and, in use, is arranged substantially vertically.

More in detail, the support panel 2 has a rear surface 2a that can be connected to a wall and a front surface 2b opposite the rear surface 2a, therefore facing the environment.

According to the present invention, at least one channel 3, 4 is obtained in the support panel 2. In particular, the channel 3, 4 is obtained on the front surface 2b, so as to be accessible once the support panel 2 is attached to the wall. Such channel 3, 4 is suitable for housing a plant irrigation or drainage pipe 5, 6. More details on the pipes 5, 6 that can be associated with kit 1 will be given hereinafter in this description.

More in detail, the kit 1 provides at least one delivery channel 3 and one drainage channel 4. In use, the delivery channel 3 houses a delivery pipe 5. Similarly, the drainage channel 4 is arranged to contain a drainage pipe 6. Such channels 3, 4 are at least partially distinct from each other.

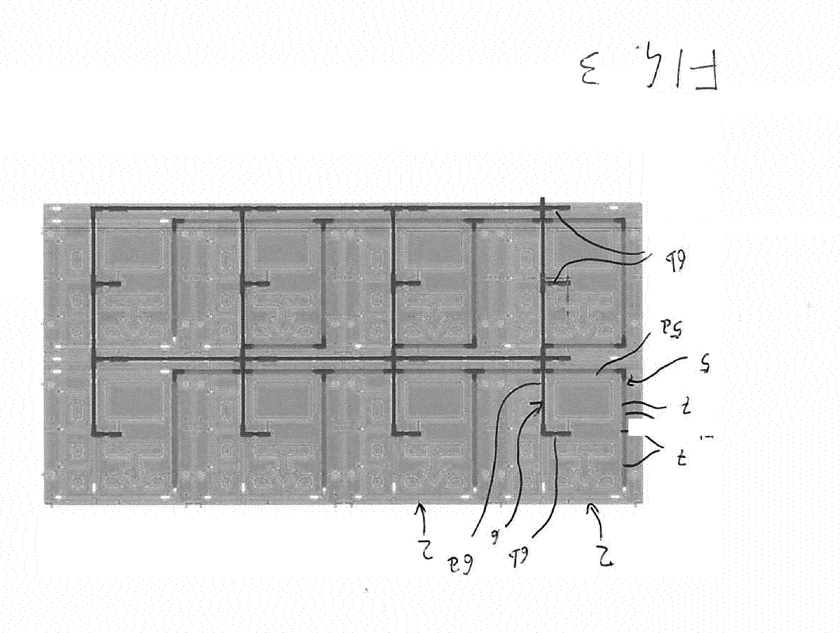

In further detail, the delivery channel 3 comprises a main delivery channel 3a, in particular arranged horizontally. Such main channel 3a runs throughout the width of the support panel so that, in use, a single channel may be defined by placing several support panels 2 side by side. The delivery channel 3 also comprises a delivery branch 3b, which can be associated with at least one vase 10. The delivery branch 3b is connected to the main delivery channel 3a, and extends in particular along a vertical direction as shown for example in Figure 3.

Optionally, the kit 1 comprises a delivery pipe 5, which can be inserted into the delivery channel 3 and connected in fluid communication with a water source. In use, the delivery pipe 5 extends along the main delivery channel 3a of several support panels 2. Within each support panel 2, the delivery pipe 5 extends with an irrigation portion 5a within the delivery branch 3b of the delivery channel 3. One or more irrigation openings 7 are obtained in the irrigation portion 5a, and can each be associated with a respective vase 10.

The drainage channel 4 has a main drainage channel 4a, in particular vertically arranged. It is worth noting that the main drainage channel 4a runs throughout the entire height of the support panel 2 and therefore, in use, it is possible to define a single channel by overlapping several support panels 2. The drainage channel 4 further comprises one or more drainage branches 4b, which can be associated with at least one vase 10. Each drainage branch 4b extends horizontally, and is connected to the main drainage channel 4a, as shown for example in Figure 3.

Optionally, the kit 1 includes a drainage pipe 6, which can be inserted into the drainage channel 4 and connected in fluid communication with a water source. In use the drainage pipe 6 extends along the main drainage channel 4a of several support panels 2. Within each support panel 2, the drainage pipe 6 extends with a collection portion 6a within each drainage branch 4b of the drainage channel 4. Each collection portion 6a can be connected to a respective vase 10.

In the preferred embodiment of the invention, the drainage pipe 6 is placed in fluid communication with the delivery pipe 5. Advantageously, the water drained from the vases 10 is thereby re-introduced into the delivery pipe 5, reducing the water consumption of the irrigation system.

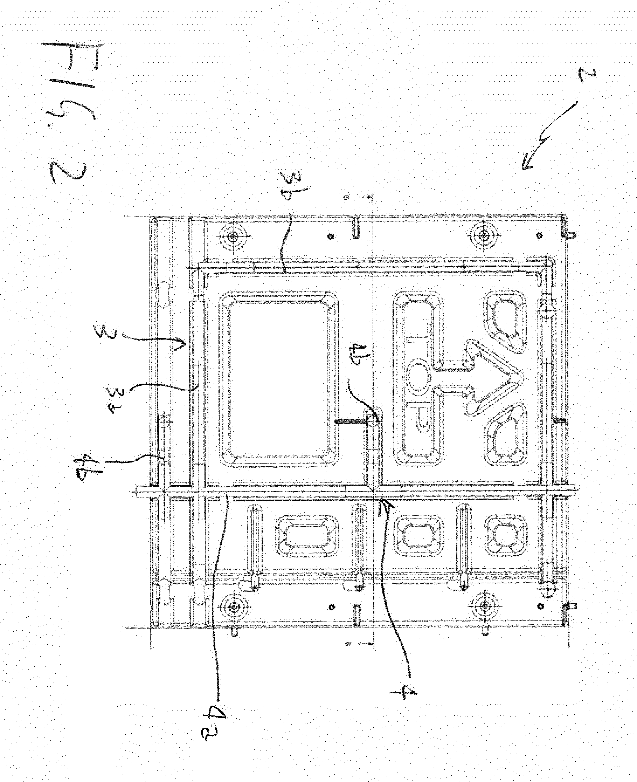

In the embodiment shown in Figures 1-3, the kit 1 comprises a cover panel 8, which is arranged to receive and support a vegetable, i.e. a plant or moss.

In addition, the air space created between the support panel and the fixing wall increases the thermal insulation level of the building if the solution is placed outside.

In addition, running water flowing in the pipes benefits the building by increasing the cooling of the wall. The cover panel 8 is fixable to the support panel 2, in particular it has substantially the same dimensions as the support panel 2 to close the channels 3, 4 described above. In particular, the cover panel 8 is placed to cover the front surface 2b of the support panel 2.

As shown for example in Figure 1, the kit 1 comprises at least one vase 10, which can be attached to the cover panel 8. The cover panel 8 has a series of holes 9 which, in use, allow the water coming out of the delivery pipe 5 to flow into the vases 10.

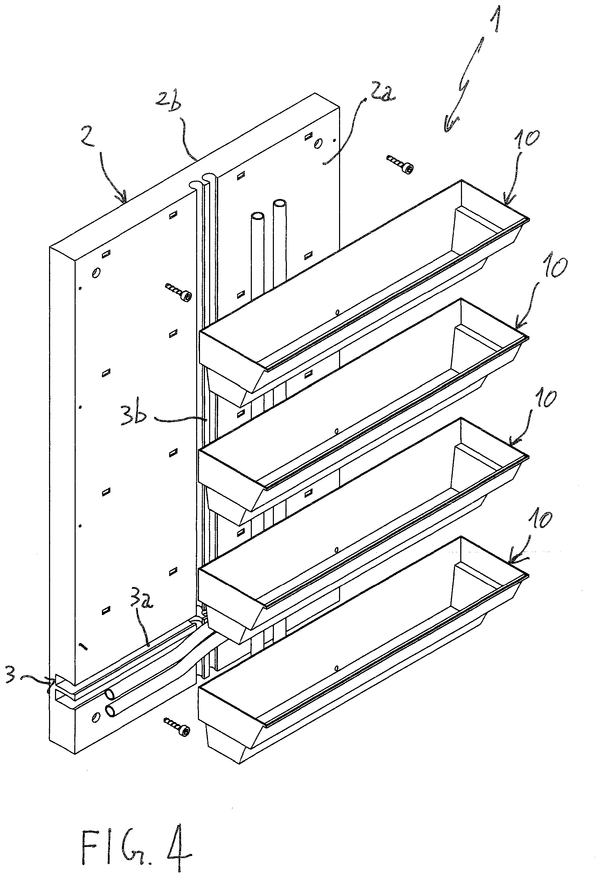

In an alternative embodiment, shown in Figure 4, the kit 1 does not comprise the cover panel 8. In this case, the vases 10 are attached directly to the support panel 2.

According to an alternative embodiment, not shown, of the invention, the cover panel 8 does not hold vases 10, but is itself made of biocompatible material, preferably polymeric, and is therefore suitable for promoting moss growth.

## Claims

1. Kit (1) for attaching a plant to a wall, comprising
- a support panel (2) fixable to a wall;
- at least one delivery channel (3) and one drainage channel (4) obtained in the support panel (2);
- an irrigation apparatus (5, 6) at least partially insertable in the delivery channel and the drainage channel and suitable for recovering the drainage water from the plant; **characterised in that** it comprises at least a delivery pipe (5) and a drainage pipe (6) which can be inserted in the delivery channel (3) and the drainage channel (4) respectively, said delivery pipe (5) being connectable in fluid communication with a water source, the drainage pipe (6) being in fluid communication with the delivery pipe (5) to re-introduce the water drained by said plants into the delivery pipe (5).

2. Kit (1) according to the preceding claim, **characterised in that** the delivery channel (3) and the drainage channel (4) are at least partially distinct from each other.

3. Kit (1) according to the preceding claim, **characterized in that** the delivery channel (3) comprises a delivery branch (3b), adapted to be associated with at least one vase (10).

4. Kit (1) according to claim 2 or 3, **characterized in that** the drainage channel (4) comprises at least a drainage branch (4b), adapted to be associated with a respective vase (10).

5. Kit (1) according to any one of the preceding claims, **characterized in that** it comprises a cover panel (8) adapted to receive and support a plant, said cover panel (8) being fixable to said support panel (2); the support panel (2) has a rear surface (2a) connectable to a wall and a front surface (2b) opposite to the rear surface (2a), said cover panel (8) being arranged to cover the front surface (2b).

6. Kit (1) according to the preceding claim, **characterized in that** said cover panel (8) is made of a biocompatible material, preferably of polymeric nature and adapted to support moss.

7. Kit (1) according to claim 5 or 6, **characterized in that** it comprises at least one vase (10) fixable to said cover panel (8).

## Patentansprüche

1. Kit (1) zum Befestigen einer Pflanze an einer Wand, umfassend
- eine an einer Wand befestigbare Trägerplatte (2);
- mindestens einen in der Trägerplatte (2) ausgebildeten Zuführungskanal (3) und einen Ableitungskanal (4);
- eine Bewässerungsvorrichtung (5, 6), die zumindest teilweise in den Zuführungskanal und den Ableitungskanal einführbar ist und zur Rückgewinnung des Ableitungswassers von der Pflanze geeignet ist;
**dadurch gekennzeichnet, dass** es mindestens ein Zuführungsrohr (5) und ein Ableitungsrohr (6) umfasst, die jeweils in den Zuführungskanal (3) und den Ableitungskanal (4) eingeführt werden können, wobei das Zuführungsrohr (5) in Fluidverbindung mit einer Wasserquelle verbindbar ist, wobei das Ableitungsrohr (6) in Fluidverbindung mit dem Zuführungsrohr (5) steht, um das von den Pflanzen abgeleitete Wasser wieder in das Zuführungsrohr (5) einzuleiten.

2. Kit (1) nach dem vorstehenden Anspruch, **dadurch gekennzeichnet, dass** der Zuführungskanal (3) und der Ableitungskanal (4) zumindest teilweise voneinander getrennt sind.

3. Kit (1) nach dem vorstehenden Anspruch, **dadurch gekennzeichnet, dass** der Zuführungskanal (3) einen Zuführungszweig (3b) umfasst, der angepasst ist, um mit mindestens einer Vase (10) verbunden zu werden.

4. Kit (1) nach Anspruch 2 oder 3, **dadurch gekennzeichnet, dass** der Ableitungskanal (4) mindestens einen Ableitungszweig (4b) umfasst, der angepasst ist, um mit einer entsprechenden Vase (10) verbunden zu werden.

5. Kit (1) nach einem der vorstehenden Ansprüche, **dadurch gekennzeichnet, dass** es eine Abdeckplatte (8) umfasst, die zum Aufnehmen und Stützen einer Pflanze angepasst ist, wobei die Abdeckplatte (8) an der Trägerplatte (2) befestigbar ist; die Trägerplatte (2) eine mit einer Wand verbindbare Rückseite (2a) und eine der Rückseite (2a) gegenüberliegende Vorderseite (2b) aufweist, wobei die Abdeckplatte (8) angeordnet ist, um die Vorderseite (2b) abzudecken.

6. Kit (1) nach dem vorstehenden Anspruch, **dadurch gekennzeichnet, dass** die Abdeckplatte (8) aus einem biokompatiblen Material, vorzugsweise polymerer Natur, besteht und zum Tragen von Moos geeignet ist.

7. Kit (1) nach Anspruch 5 oder 6, **dadurch gekennzeichnet, dass** es mindestens eine Vase (10) umfasst, die an der Abdeckplatte (8) befestigbar ist.

## Revendications

1. Kit (1) pour fixer une plante à un mur, comprenant
- un panneau de support (2) pouvant être fixé à un mur ;
- au moins un canal de distribution (3) et un canal de drainage (4) obtenus dans le panneau de support (2) ;
- un appareil d'irrigation (5, 6) au moins partiellement insérable dans le canal de distribution et le canal de drainage et adapté pour récupérer l'eau de drainage de la plante ;
**caractérisé en ce qu'**il comprend au moins un tuyau de distribution (5) et un tuyau de drainage (6) qui peuvent être insérés dans le canal de distribution (3) et le canal de drainage (4) respectivement, ledit tuyau de distribution (5) pouvant être relié en communication fluidique avec une source d'eau, le tuyau de drainage (6) étant en communication fluidique avec le tuyau de distribution (5) pour réintroduire l'eau drainée par lesdites plantes dans le tuyau de distribution (5).

2. Kit (1) selon la revendication précédente, **caractérisé en ce que** le canal de distribution (3) et le canal de drainage (4) sont au moins partiellement distincts l'un de l'autre.

3. Kit (1) selon la revendication précédente, **caractérisé en ce que** le canal de distribution (3) comprend une branche de distribution (3b), adaptée pour être associée à au moins un vase (10).

4. Kit (1) selon la revendication 2 ou 3, **caractérisé en ce que** le canal de drainage (4) comprend au moins une branche de drainage (4b), adaptée pour être associée à un vase (10) respectif.

5. Kit (1) selon l'une quelconque des revendications précédentes, **caractérisé en ce qu'**il comprend un panneau de couverture (8) adapté pour recevoir et supporter une plante, ledit panneau de couverture (8) pouvant être fixé audit panneau de support (2) ; le panneau de support (2) a une surface arrière (2a) pouvant être reliée à un mur et une surface avant (2b) opposée à la surface arrière (2a), ledit panneau de couverture (8) étant agencé pour couvrir la surface avant (2b).

6. Kit (1) selon la revendication précédente, **caractérisé en ce que** ledit panneau de couverture (8) est fabriqué en un matériau biocompatible, de préférence de nature polymère et adapté pour supporter la mousse.

7. Kit (1) selon la revendication 5 ou 6, **caractérisé en ce qu'**il comprend au moins un vase (10) pouvant être fixé audit panneau de couverture (8).
